(19) Europäisches Patentamt
European Patent Office
Office européen des brevets

(11) EP 3 271 432 B1

(12) # EUROPÄISCHE PATENTSCHRIFT

(45) Veröffentlichungstag und Bekanntmachung des Hinweises auf die Patenterteilung:
**31.07.2019 Patentblatt 2019/31**

(21) Anmeldenummer: **16709797.1**

(22) Anmeldetag: **14.03.2016**

(51) Int Cl.:
***C09D 175/04*** (2006.01) ***C08G 18/73*** (2006.01)
***C08G 18/78*** (2006.01) ***C08G 18/79*** (2006.01)
***C08G 18/09*** (2006.01) ***C09D 175/06*** (2006.01)

(86) Internationale Anmeldenummer:
**PCT/EP2016/055440**

(87) Internationale Veröffentlichungsnummer:
**WO 2016/146574 (22.09.2016 Gazette 2016/38)**

(54) **POLYISOCYANATZUSAMMENSETZUNG AUF BASIS VON 1,5-PENTAMETHYLENDIISOCYANAT**

POLYISOCYANATE COMPOSITION BASED ON 1,5-PENTAMETHYLENDIISOCYANATE

COMPOSITION DE POLYISOCYANATE À BASE DE 1,5-PENTAMÉTHYLÈNE DIISOCYANATE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.03.2015 EP 15159291**

(43) Veröffentlichungstag der Anmeldung:
**24.01.2018 Patentblatt 2018/04**

(73) Patentinhaber: **Covestro Deutschland AG**
**51373 Leverkusen (DE)**

(72) Erfinder:
- **HECKING, Andreas**
  **40764 Langenfeld (DE)**
- **EGGERT, Christoph**
  **50733 Köln (DE)**
- **WERNER, Uwe**
  **50767 Köln (DE)**
- **YUVA, Nusret**
  **51399 Burscheid (DE)**
- **BEHNKEN, Gesa**
  **50676 Köln (DE)**
- **REYER, Robert**
  **40764 Langenfeld (DE)**

(74) Vertreter: **Levpat**
**c/o Covestro AG**
**Gebäude 4825**
**51365 Leverkusen (DE)**

(56) Entgegenhaltungen:
**EP-A1- 2 684 867** **EP-A2- 2 289 963**
**DE-B1- 1 493 360** **US-A- 5 208 334**

- **JACOBS P B ET AL: "Cycloaliphatic AMT polyisocyanates and their blends", EUROPEAN COATINGS JOURNAL, VINCENTZ NETWORK, HANNOVER, DE, Nr. 9, 1. Januar 1996 (1996-01-01), Seiten 594-600, XP009186182, ISSN: 0930-3847 in der Anmeldung erwähnt**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 271 432 B1

## Beschreibung

Die Erfindung betrifft eine Polyisocyanatzusammensetzung, enthaltend Isocyanatgruppen aufweisende Verbindungen mit wenigstens einer 1,5- verbrückenden Pentamethyleneinheit und einer Isocyanuratgruppe, wobei ein Teil der Verbindungen zusätzlich noch wenigstens eine Allophanatgruppe aufweist. Ein weiterer Gegenstand der Erfindung ist ein Verfahren zur Herstellung einer solchen Polyisocyanatzusammensetzung. Darüber hinaus sind ein, die Polyisocyanatzusammensetzung enthaltendes, Zwei-Komponenten-System, dessen Verwendung zur Herstellung einer Beschichtung auf einem Substrat und der Verbund aus der Beschichtung und dem Substrat weitere Gegenstände der Erfindung.

Zwei-Komponenten Polyurethan-Beschichtungen sind seit langem bekannt. Für hochwertige lichtechte Decklacke kommen dabei besonders Beschichtungen aus aliphatischen Polyisocyanaten und Polyolen wie z. B. Polyacrylatpolyolen, Polyesterpolyolen oder Polycarbonatpolyolen zum Einsatz. Als Polyisocyanate kommen für diese hochwertigen Beschichtungen besonders monomerenarme Derivate hergestellt aus 1,6-Hexamethylendiisocyanat (HDI) zum Einsatz. Besonders geeignet für elastische hochbeständige Beschichtungen sind dafür Isocyanurat-Polyisocyanate des HDI oder Iminooxadiazindion- und Isocyanurat-Strukturen aufweisende Polyisocyanate des HDI, wie sie z. B. in H. J. Laas, R. Halpaap, J. Pedain, J. prakt. Chem. 1994, 336, 185-200 oder in EP 0330966 B1 oder EP 0798299 B1 beschrieben sind. Diese Polyisocyanate haben in der Regel Isocyanatfunktionalitäten ($F_{NCO}$) von 3 oder mehr, wobei man unter Isocyanatfunktionalität die mittlere Zahl an NCO-Gruppen pro Molekül versteht.

Die Verarbeitung von solchen Lacksystemen ist z. B. in H.-U. Meier-Westhues, Polyurethane - Lacke, Kleb- und Dichtstoffe, Hannover Vincentz Network 2007 auf Seiten 72 ff. beschrieben. Während sowohl die Rohstoffe wie Polyisocyanate als auch die Polyole als Reaktionspartner und ebenso die Verarbeitungstechnologie immer weiter optimiert wurden bleiben einige grundsätzliche Zusammenhänge und Abhängigkeiten bestehen. So weisen die verschiedenen Derivate der jeweiligen Polyisocyanate ein eingeschränktes Spektrum an Polarität auf. Die bekannten Polyisocyanurate des HDI bilden den schwach polaren Bereich ab. Wobei im Falle der HDI-Polyisocyanate auch Biuret-Strukturen bekannt sind, welche sich in ihrer Polarität von den Polyisocyanurat-Strukturen absetzen.

Insbesondere mit steigenden Anforderungen an die Beständigkeit eines Beschichtungssystem z. B. in der Wetterbeständigkeit und Chemikalienbeständigkeit gepaart mit einem hohen Abriebwiderstand, Glanzhaltung und Lichtechtheit ist der Anwender auf Bindemittelseite auf hoch OH-Gruppen haltige Systeme angewiesen. Solche Systeme besitzen auf Grund ihrer chemischen Zusammensetzung eine gegenüber Standartbindemitteln erhöhte Polarität. Dem Fachmann ist bekannt, dass diese Polaritätsunterschiede zwischen dem Bindemittel und dem Polyisocyanat im applizierten Lacksystem zu erheblichen Glanzverlusten, welche nur bedingt durch die Verwendung von Additiven überwunden werden können, führen.

Die für die Vernetzung mit Polyisocyanaten vorgesehenen OH-Gruppen enthaltenden Bindemittel werden neben anderen Parametern vor allem durch ihren Gehalt an Hydroxylgruppen charakterisiert. Dieser kann in der Masse an Hydroxylgruppen bezogen auf 100 g Feststoffgehalt des Bindemittels (Gew.-%) angegeben werden. Als für den Fachmann grobe Skalierung der Bindemittel gelten Gehalte an Hydroxylgruppen $\geq$ 5,0 Gew.-% als in der Regel unverträglich mit Polyisocyanuraten auf Basis von HDI. Im Folgenden werden Bindemittel mit einem Gehalt an Hydroxylgruppen $\geq$ 5,0 Gew.-% auch als hoch OH-gruppenhaltige Verbindungen bezeichnet.

Im Bereich der hoch OH-gruppenhaltigen Bindemittel ist der Anwender auf die Verwendung von Biuretstrukturen enthaltenden Vernetzer angewiesen, da mit den Polyisocyanuraten eine dem Fachmann bekannte Unverträglichkeit besteht. Die bisher zur Vernetzung mit polaren Bindemittel eingesetzten Biuret Derivate des HDI weisen sowohl strukturbedingt einen niedrigen Gehalt an reaktiven NCO-Gruppen als auch eine gegenüber anderen Derivaten erhöhte Viskosität auf und genügen somit nicht in allen Aspekten den für eine moderne Lackiertechnik gewünschten Anforderungen.

Neben dem HDI ist auch 1,5-Pentamethylendiisocyanat (PDI) als Monomer bereits lange bekannt, wie beispielsweise von W. Siefken, Liebigs Ann. Chem. 1949, 562, Seite 122 oder in der DE 1493360 B1 und der DE 1900514 A1 beschrieben. Über den Einfluss von Allophanatgruppenhaltigen Polyisocyanuraten und ihre Verträglichkeit weisen P.B. Jacobs; H. Mertes; R.S. Dearth in Ihrem Artikel im European coatings journal, N°9, Seite 594-600, 1996, Cycloaliphatic AMT polyisocyanates and their blends, hin. In den Tabellen 3, 4 und 6 auf den Seiten 263 und 264, werden Allophanatgruppen-modifizierten Trimere (AMT) sowie Polyisocyanurate auf Basis von HDI miteinander verglichen. In keiner der beschriebenen Formulierungen heben sich die AMT Verbindungen von den Standard Polyisocyanuraten des HDI im Punkto Glanz ab.

Die EP 2543736 A1 beschreibt den fermentativen Prozess zur Gewinnung von 1,5-Pentandiamin aus Lysin. Weiterhin werden Polyisocyanate ausgehend von 1,5-Pentamethylendiisocyanat offenbart, die Isocyanurat-, Allophanat-, Biuret-, Urethan- und Harnstoffgruppen aufweisen können. Jedoch offenbart die EP 2543736 A1 keine Polyisocyanate, die sich durch eine verbesserte Verträglichkeit gegenüber hoch OH-gruppenhaltigen Bindemitteln auszeichnen. Der in dieser Schrift ausschließlich beschriebene und verwendete Katalysator führt, wie auch in der EP 1091991 B1 beschrieben, zu einem sehr derivatreinen Isocyanurattrimer. Zwar weist dieses Derivat einen höheren Gehalt an reaktiven

NCO-Gruppen auf, andererseits wird jedoch keine im Vergleich zu einem Polyisocyanurat auf Basis von HDI verbesserte Verträglichkeit gegenüber polaren Bindemitteln beschrieben.

Die EP 0524500 A1 und EP 0524501 A1 offenbaren Polyisocyanate ausgehend von aliphatischen Diisocyanaten mit 4 bis 18 Kohlenstoffatomen, bevorzugt von HDI und einem Verhältnis von Allophanatgruppen zu Isocyanuratgruppen von > 0,1 und < 5 und weisen im Falle von Allophanat haltigen Polyisocyanaten auf eine verbesserte Verträglichkeit hin. Jedoch lassen diese offen, inwieweit sich reine Isocyanurat haltige Polyisocyanate in ihrer Verträglichkeit von Allophanatgruppen haltigen unterscheiden, da keine der genannten Schriften hierzu vergleichende Versuche offenbaren.

Die JP 2007-112936 A offenbart ein aliphatisches Polyisocyanat mit einem Gehalt an Isocyanurattrimer von 60 bis 95 Gew.-% bezogen auf die Gesamtmenge an Polyisocyanat und beschreibt einen Gehalt von unter 60 Gew.-% als unvorteilhaft für die Viskosität und damit nachteilig für die Anwendbarkeit eines solchen Polyisocyanates.

Daher war es weiterhin wünschenswert, einen Vernetzter bereit stellen zu können, welcher überwiegend Polyisocyanurat Strukturen enthält und über ein breites Spektrum mit hoch OH-gruppenhaltigen Verbindungen verträglich ist und nicht mit Einschränkungen hinsichtlich der Anwendbarkeit in beispielsweise Zwei-Komponenten-Polyurethan-Lacksystemen behaftet ist.

Aufgabe der vorliegenden Erfindung war es, eine Polyisocyanatzusammensetzung auf Basis von 1,5-Pentamethylendiisocyanat zur Verfügung zu stellen, die im Vergleich zum Stand der Technik eine deutlich verbesserte Verträglichkeit gegenüber hoch OH-gruppenhaltigen Bindemitteln aufweisen.

Diese Aufgabe wurde erfindungsgemäß durch eine Polyisocyanatzusammensetzung, enthaltend Isocyanatgruppen aufweisende Verbindungen mit wenigstens einer 1,5- verbrückenden Pentamethyleneinheit und einer Isocyanuratgruppe, wobei ein Teil der Verbindungen zusätzlich noch wenigstens eine Allophanatgruppe aufweist, dadurch gekennzeichnet, dass die Polyisocyanatzusammensetzung einen Gehalt an Isocyanurattrimer von ≤ 59 Gew.-% bezogen auf das Gesamtgewicht der Polyisocyanatzusammensetzung aufweist, die Allophanatgruppen einen gegenüber Isocyanatgruppen inerten, organischen Rest tragen und die Allophanatgruppen zu den Isocyanuratgruppen in einem Äquivalentverhältnis von > 0 und ≤ 0,19 vorliegen, gelöst.

Überraschend wurde nun gefunden, dass sich die erfindungsgemäße Polyisocyanatzusammensetzung gegenüber dem Stand der Technik durch eine verbesserte Verträglichkeit mit besonders bevorzugt hoch OH-Gruppenhaltigen Verbindungen auszeichnet und sich sehr gut zu Zwei-Komponenten-Systemen formulieren lässt. Die aus den Zwei-Komponenten-Systemen erhältlichen Beschichtungen zeichnen sich durch einen, gegenüber dem Stand der Technik deutlich verbesserten Glanz bei gleichbleibend sehr guten physikochemischen Eigenschaften aus. Ferner zeichnet sich die erfindungsgemäße Polyisocyanatzusammensetzung durch eine niedrige Viskosität sowie einen hohen Gehalt an reaktiven NCO-Gruppen aus.

Vorliegend werden unter 1,5- verbrückenden Pentamethyleneinheiten Struktureinheiten verstanden, die aus linearen Pentamethyleneinheiten ($-CH_2CH_2CH_2CH_2CH_2-$) bestehen, die an Position 1 mit dem Stickstoffatom einer Isocyanatgruppe, dem Stickstoffatom einer Isocyanuratgruppe oder dem Stickstoffatom einer Allophanatgruppe, die einen gegenüber Isocyanatgruppen inerten, organischen Rest trägt, und an Position 5 mit dem Stickstoffatom einer Isocyanuratgruppe oder dem Stickstoffatom einer Allophanatgruppe, die einen gegenüber Isocyanatgruppen inerten, organischen Rest trägt, verbunden sind. Hierbei kann die Bezeichnung der Positionen 1 und 5 auch getauscht werden.

Im Rahmen der vorliegenden Erfindung werden unter Trimerstrukturen folgende Isocyanuratstruktureinheiten verstanden, die über die oben beschriebenen Pentamethyleneinheiten gemäß der oligomeren Verteilung statistisch miteinander verknüpft sind:

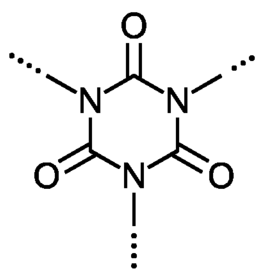

Isocyanuratgruppe

Die Angabe des Gehalts an Isocyanurattrimer als Gewichtsanteil bezogen auf das Gesamtgewicht der Polyisocyanatzusammensetzung bezieht sich erfindungsgemäß auf die Verbindungen in der Polyisocyanatzusammensetzung, die genau eine Isocyanuratgruppe und drei Isocyanatgruppen enthalten.

Vorliegend werden unter Allophanatgruppen folgende Struktureinheiten verstanden:

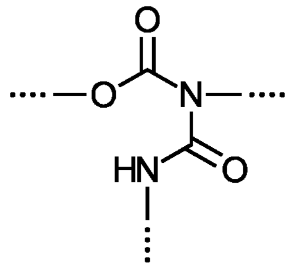

Allophanatgruppe

Die genannten Allophanatgruppen werden während des Trimerisierungsprozesses statistisch mit in die Oligomerenverteilung der Isocyanurate eingebaut.

Im Rahmen der vorliegenden Erfindung wird unter einer guten Verträglichkeit von NCO-funktionellem Vernetzungsmittel und der erfindungsgemäßen Polyisocyanatzusammensetzung verstanden, dass die beiden Komponenten gemeinsam in geeigneten Lösungsmitteln homogene Lösungen ergeben, und vor allem während der Filmbildung durch Diffusionsvorgänge homogene Filme bilden und sich nicht trennen. Kommt es während der Filmbildung zu einer Inhomogenität führen diese zu Störungen in der Oberfläche, welche wiederum zu Abweichungen im Verhältnis zwischen eingestrahltem und von der Oberfläche reflektiertem Licht führen. Das Verhältnis zwischen eingestrahltem und von der Oberfläche reflektiertem Licht unter dem Winkel der spiegelnden Reflexion wird für die Beschreibung ebener Oberflächen als Glanz angegeben. Als Maß für die Verträglichkeit von Lacksystemen hat sich die Glanzmessung etabliert. Der Glanz wurde nach DIN EN ISO 2813 im 20° und 60° Winkel mittels eines Reflektometers gemessen.

In einer ersten bevorzugten Ausführungsform ist der Gehalt an Isocyanurattrimer $\leq$ 56 Gew.-%, bevorzugt $\leq$ 51 Gew.-% und besonders bevorzugt $\leq$ 47 Gew.-% bezogen auf das Gesamtgewicht der erfindungsgemäßen Polyisocyanatzusammensetzung.

Der Gehalt an Isocyanurattrimer lässt sich beispielsweise durch Gelpermeations-Chormatographie nach der DIN 55672-1 bestimmen.

Gemäß einer weiteren bevorzugten Ausführungsform liegt das Äquivalentverhältnis der Allophanatgruppen zu den Isocyanuratgruppen zwischen $\geq$ 0,02 und $\leq$ 0,18, bevorzugt zwischen $\geq$ 0,05 und $\leq$ 0,16 und besonders bevorzugt zwischen $\geq$ 0,10 und $\leq$ 0,15. Hieraus ergibt sich unter anderem der Vorteil, dass die Ressourcen-Effizienz gegenüber einem reinen Allophanat weiter gesteigert werden kann, was das grundsätzliche Bestreben nach einer ökonomisch und ökologisch optimierten Formulierung unterstützt. Im Vergleich zu reinen Polyisocyanuraten sinkt mit steigendem Allophanatgruppenanteil der Gehalt an reaktiven NCO-Gruppen, wodurch sich die Menge an einzusetzendem Härter gegenüber dem Bindemittel erhöht, was wiederum eine Erhöhung der Lösungsmittelmenge erfordert.

Das Äquivalentverhältnis von Allophanatgruppen zu den Isocyanuratgruppen kann z. B. durch eine NMR-spektroskopische Untersuchung bestimmt werden. Bevorzugt lässt sich hierbei die $^{13}$C-NMR-Spektroskopie, vorzugsweise protonenentkoppelt, einsetzen, da die Allophanat-, Isocyanurat- und/oder Uretdiongruppen charakteristische Signale liefern. Die chemische Verschiebung der oben genannten Verbindungen im NMR-Spektrum ist in der Literatur bekannt (vgl. D. Wendisch, H. Reiff und D. Dieterich, Angew. Makromol. Chem. 1986, 141, 173-183 und darin zitierte Literatur).

Eine Kombination der beiden vorstehend genannten Ausführungsformen kann besonders vorteilhaft sein, wenn Bindemittel mit einem OH-Gehalt $\geq$ 7,0 Gew.-% als NCO-funktionelle Vernetzungsmittel zum Einsatz kommen, da hier eine besonders hohe Verträglichkeit vorliegt.

In einer weiteren bevorzugten Ausführungsform wird der gegenüber Isocyanatgruppen inerte organische Rest aus der Gruppe linearer, verzweigter und gegebenenfalls substituierter Reste mit 1 bis 18 Kohlenstoffatomen, bevorzugt mit 1 bis 12 Kohlenstoffatomen und besonders bevorzugt mit 1 bis 8 Kohlenstoffatomen ausgewählt.

In Bezug auf die erfindungsgemäße Polyisocyanatzusammensetzung ist es ebenfalls bevorzugt, wenn der organische Rest über ein primäres oder sekundäres, bevorzugt über ein primäres Kohlenstoffatom mit der Allophanatgruppe verbunden ist.

Geeignete organische Reste sind beispielsweise Methyl-, Ethyl-, 1-Propyl-, 2-Propyl-, n-Butyl-, iso-Butyl-, sec-Butyl-, n-Hexyl-, 2-Ethyl-1-hexyl-, sowie die zu einer Allophanatgruppe umgesetzten nachstehend genannten Etheralkohole, wie z. B. 1-Methoxy-2-propanol, 3-Ethyl-3-hydroxymethyloxetan, Tetrahydrofurfurylalkohol, Ethylengylkol-monomethylether, Ethylenglykolmonoethylether, Ethylenglykolmonobutylether, Diethylenglykolmonomethylether, Diethylenglykolmonoethylether, Diethylenglykolmonobutylether oder auch flüssige höhermolekulare Polyethylenglykolmonoalkylether, Polypropylenglykolmonoalkylether, gemischte Polyethylen/polypropylenglykolmonoalkylether; Esteralkohole, wie z. B. Ethylen-glykolmonoacetat, Propylen-glykolmonolaurat, Glycerindiacetat, 2,2,4-Trimethyl- 1,3-pentandiolmonoisobutyrat; ungesättigte Alkohole wie z. B. Allylalkohol, 1,1-Dimethyl-allylalkohol oder Oleinalkohol; araliphatische

Alkohole wie z. B. Benzylalkohol.

Gemäß einer weiteren bevorzugten Ausführungsform weist die erfindungsgemäße Polyisocyanatzusammensetzung einen Gehalt an Isocyanatgruppen zwischen ≥ 15% und ≤ 25%, bevorzugt zwischen ≥ 17% und ≤ 24% und besonders bevorzugt zwischen ≥ 20% und ≤ 23%, bezogen auf das Gesamtgewicht der erfindungsgemäßen Polyisocyanatzusammensetzung auf.

Dieser Gehalt an Isocyanatgruppen kann auch als NCO-Gehalt bezeichnet werden und lässt sich beispielsweise mittels Titration gemäß DIN EN ISO 11 909 bestimmen.

Es ist weiterhin besonders bevorzugt, wenn der Restmonomerengehalt an 1,5-Pentamethylendiisocyanat in der erfindungsgemäßen Polyisocyanatzusammensetzung unter 0,5 Gew.-%, bevorzugt unter 0,3 Gew.-% liegt. Die Bestimmung der Restmonomergehalte kann beispielsweise gaschromatographisch nach der DIN EN ISO 10283 erfolgen.

In einer weiteren bevorzugten Ausführungsform weist die erfindungsgemäße Polyisocyanatzusammensetzung nach DIN EN ISO 3219 bei 23 °C eine Viskosität von ≤ 36.000 mPa*s, bevorzugt von ≤ 24.000 mPa*s und besonders bevorzugt von ≤ 12.000 mPa*s auf.

Die Viskosität kann nach DIN EN ISO 3219 beispielsweise bei 23 °C mit dem Viskosimeter VT 550 der Fa. Haake bestimmt werden.

Als Isocyanatkomponente kommt bei der Herstellung der erfindungsgemäßen Polyisocyanatzusammensetzung wenigstens 1,5-Pentamethylendiisocyanat zum Einsatz, welche mit wenigstens einem linearen, verzweigten und gegebenenfalls substituierten, in der Seitenkette gegenüber Isocyanatgruppen inerten Monoalkohol vermischt wird und in Anwesenheit eines Katalysators zu der Polyisocyanatzusammensetzung umgesetzt wird. Daher ist ein solches Verfahren ein weiterer Gegenstand der vorliegenden Erfindung.

In einer bevorzugten Ausführungsform kann die Isocyanatkomponente zur Durchführung des erfindungsgemäßen Verfahrens, gegebenenfalls unter Inertgas, wie beispielsweise Stickstoff, und gegebenenfalls in Gegenwart eines Lösungsmittels bei einer Temperatur zwischen 0 und 180 °C, vorzugsweise 20 bis 140 °C, besonders bevorzugt 40 bis 100 °C vorgelegt werden.

Nach dem Vorlegen der Isocyanatkomponente kann der Katalysator bzw. eine Mischung des Katalysators mit einem geeigneten Katalysatorlösungsmittel in der nachstehend angegebenen Menge zugegeben werden. Die Zugabe des Katalysators kann dabei in einer oder mehreren Portionen oder auch kontinuierlich, z. B. mit Hilfe einer geeigneten Dosierpumpe, über die gesamte Dauer der Umsetzung erfolgen.

Für den Einsatz im erfindungsgemäßen Verfahren sind als lineare, verzweigte und gegebenenfalls substituierte, in der Seitenkette gegenüber Isocyanatgruppen inerte Monoalkohole besonders Monoalkohole geeignet, die 1 bis 18 Kohlenstoffatomen, bevorzugt mit 1 bis 12 Kohlenstoffatomen und besonders bevorzugt mit 1 bis 8 Kohlenstoffatomen aufweisen.

Besonders bevorzugt ist es, dass die eingesetzten Monoalkohole primäre oder sekundäre, ganz besonders bevorzugt primäre Monoalkohole sind.

Geeignete Monoalkohole für das erfindungsgemäße Verfahren sind beispielsweise Methanol, Ethanol, n-Propanol, Isopropanol, n-Butanol, sec-Butanol, iso-Butanol, n-Hexanol, 2-Ethyl-1-hexanol Etheralkohole, wie z. B. 1-Methoxy-2-propanol, 3-Ethyl-3-hydroxymethyloxetan, Tetrahydrofurfurylalkohol, Ethylengylkol-monomethylether, Ethylenglykolmonoethylether, Ethylenglykolmonobutylether, Diethylenglykolmonomethylether, Diethylenglykolmonoethylether, Diethylenglykolmono-butylether oder auch flüssige höhermolekulare Polyethylenglykolmonoalkylether, Polypropylenglykolmonoalkylether, gemischte Polyethylen/polypropylenglykolmonoalkylether; Esteralkohole, wie z. B. Ethylen-glykolmonoacetat, Propylen-glykolmonolaurat, Glycerindiacetat, 2,2,4-Trimethyl-1,3-pentandiol-monoisobutyrat; ungesättigte Alkohole wie z. B. Allylalkohol, 1,1-Dimethyl-allylalkohol oder Oleinalkohol; araliphatische Alkohole wie z. B. Benzylalkohol.

Die Temperaturen zur Durchführung des erfindungsgemäßen Verfahrens können in Abhängigkeit von den eingesetzten Verbindungen ausgewählt werden. Bevorzugt ist hierbei jedoch, wenn die Umsetzung bei Temperaturen zwischen ≥ 0 und ≤ 180 °C, vorzugsweise ≥ 20 bis ≤ 140 °C, besonders bevorzugt ≥ 40 bis ≤ 100 °C durchgeführt wird.

Das im erfindungsgemäßen Verfahren eingesetzte 1,5-Pentamethylendiisocyanat kann nach beliebigen im Stand der Technik bekannten Verfahren zur Herstellung aliphatischer Diisocyanate generiert werden, beispielsweise mit oder ohne Verwendung von Phosgen und ausgehend von, vorzugsweise biotechnologisch durch Decarboxylierung der natürlich vorkommenden Aminosäure Lysin erhaltenem, 1,5-Diaminopentan. Bei Verwendung von Phosgen kann die Phosgenierung von 1,5-Diaminopentan in der Flüssig- oder Gasphase erfolgen.

Hierbei ist es für das erfindungsgemäße Verfahren besonders bevorzugt, wenn 1,5-Diisocyanatopentan durch Phosgenierung von 1,5-Diaminopentan in der Gasphase erhalten wird. Die Phosgenierung von Aminen in der Gasphase an sich ist bekannt und kann beispielsweise, wie in EP 0 289 840 B1, EP 1 319 655 A2, EP 1 555 258 A1, EP 1 275 639 A1, EP 1 275 640 A1, EP 1 449 826 A1, EP 1 754 698 B1, DE 10 359 627 A1 oder in der deutschen Patentanmeldung DE 10 2005 042392 A1 beschrieben, erfolgen.

Die Art des Trimerisierungskatalysators spielt für die Durchführung des erfindungsgemäßen Verfahrens insofern

eine Rolle, als sie die Produktselektivität hinsichtlich der Bildung von überwiegend Allophanat- und Isocyanurat-gruppen enthaltenden Produkten beeinflussen kann.

Als Katalysatoren für die Modifizierung von Isocyanaten haben sich eine Reihe von Verbindungen bewährt, wie beispielsweise in H. J. Laas et al., J. Prakt. Chem. 1994, 336, 185 ff, D. Dieterich Methoden der organischen Chemie (Houben-Weyl), Band E 20 1987, 1741 ff, EP 0649866 A1 (Seite 4, Zeile 7 bis Seite 5, Zeile 15) oder der EP 0896009 A1 (Seite 4, Zeile 17 bis 58) beschrieben.

Geeignete Katalysatoren sind beispielsweise quaternäre Ammoniumcarboxylate, wie z. B. N-(2-Hydroxypropyl)-N,N,N-trimethylammonium-2-ethylhexanoat, N-(2-Hydroxypropyl)-N,N,N-trimethylammonium-2-formiat, N,N,N-Tetramethylammoniumoctoat, quaternäre Ammoniumhydroxide, wie z. B. Tetramethyl-, Tetraethyl-, Trimethylstearyl- und Dimethylethylcyclohexylammoniumhydroxid, N,N,N-Trimethyl-N-(2-hydroxyethyl)-ammoniumhydroxid, N,N,N-Trimethyl-N-(2-hydroxypropyl)-ammoniumhydroxid, N,N,N-Trimethyl-(2-hydroxybutyl)-ammoniumhydroxid, N,N-Dimethyl-n-dodecyl-N-(2-hydroxyethyl)-ammoniumhydroxid, N-(2-Hydroxyethyl)-N,N-dimethyl-N-(2,2'-dihydroxymethylbutyl)-ammoniumhydroxid, N-Methyl-2-hydroxyethyl-morpholiniumhydroxid, N-Methyl-N-(2-hydroxypropyl)-pyrrolidiniumhydroxid, N-Dodecyl-tris-N-(2-hydroxyethyl)-ammoniumhydroxid, Tetra-(2-hydroxyethyl)-ammoniumhydroxid, N,N,N-Trimethyl-N-benzylammoniumhydroxid, oder quaternäre Ammonium- und Phosphoniumhydrogenpolyfluoride, wie z. B. Tetrabutylphosphoniumhydrogendifluorid. Ganz besonders bevorzugte Katalysatoren dieser Gruppe sind N,N,N-Trimethyl-N-(2-hydroxyethyl)-ammoniumhydroxid, N,N,N-Trimethyl-N-(2-hydroxypropyl)-ammoniumhydroxid, N,N,N-Trimethyl-N-(2-hydroxybutyl)-ammoniumhydroxid und insbesondere N,N,N-Trimethyl-N-benzylammoniumhydroxid.

Ebenfalls geeignete Katalysatoren sind beispielsweise Hexamethyldisilazan, Heptamethyldisilazan, Diethyl-1,3-tetramethyl-1,1,3,3-disilazan, Divinyl-1,3-tetramethyl-1,1,3,3-disilazan, Hexaethyldisilazan und Diphenyl-1,3-tetramethyl-1,1,3,3-disilazan. Aus dieser Gruppe ist Hexamethyldisilazan bevorzugt.

Geeignete Mengen des Katalysators können beispielsweise bis zu 0,25 Gew.-%, bevorzugt bis zu 0,1 Gew.-% und besonders bevorzugt bis 0,05 Gew.-% sein.

Bevorzugt kommen beim erfindungsgemäßen Verfahren Katalysatorlösungsmittel zum Einsatz, die gegenüber Isocyanaten reaktive Gruppen tragen und in das Polyisocyanat eingebaut werden können. Beispiele für solche Lösungsmittel sind einfache Alkohole, wie z. B. Methanol, Ethanol, n-Propanol, Isopropanol, n-Butanol, sec-Butanol, iso-Butanol, n-Hexanol, 2-Ethyl-1-hexanol; Etheralkohole, wie z. B. 1-Methoxy-2-propanol, 3-Ethyl-3-hydroxymethyloxetan, Tetrahydrofurfurylalkohol, Ethylengylkol-monomethylether, Ethylenglykolmonoethylether, Ethylenglykolmonobutylether, Diethylenglykolmonomethylether, Diethylenglykolmonothylether, Diethylenglykolmono-butylether oder auch flüssige höhermolekulare Polyethylenglykolmonoalkylether, Polypropylenglykolmonoalkylether, gemischte Polyethylen/polypropylenglykolmonoalkylether; Esteralkohole, wie z. B. Ethylen-glykolmonoacetat, Propylen-glykolmonolaurat, Glycerindiacetat, 2,2,4-Trimethyl-1,3-pentandiol-monoisobutyrat; ungesättigte Alkohole wie z. B. Allylalkohol, 1,1-Dimethyl-allylalkohol oder Oleinalkohol; araliphatische Alkohole wie z. B. Benzylalkohol; N-monosubstituierte Amide, wie z. B. N-Methylformamid, N-Methylacetamid, Cyanacetamid oder 2-Pyrrolidinon oder beliebige Gemische derartiger Lösungsmittel.

Ganz besonders bevorzugt ist hierbei, wenn der Katalysator in dem entsprechenden Monoalkohol oder Monoalkoholgemisch gelöst eingesetzt wird, der für die Bildung der Allophanatgruppen gewünscht ist. In solchen Fällen entspricht das Katalysatorlösungsmittel dann den oben genannten Monoalkoholen. Die Reihenfolge der Zugabe der umzusetzenden Komponenten beliebig wählbar. Für den Fall, dass ein gelöster Katalysator eingesetzt wird, kann die Menge des Lösungsmittels so gewählt werden, um ein bestimmtes Äquivalentverhältnis der Allophanatgruppen zu den Isocyanuratgruppen einstellen zu können.

Verwendet man stark verdünnte Katalysatorlösungen in gegenüber Isocyanaten reaktiven Katalysatorlösungsmitteln kommt ein Problem hinzu: die bestimmungsgemäße (Haupt-)Reaktion, die Isocyanatmodifizierung, kann zwar durch frühzeitigeren Abbruch der Reaktion bei niedrigeren Umsatzstufen terminiert werden, die Reaktion des Katalysatorlösungsmittels mit den freien Isocyanatgruppen aller im Reaktionsgemisch vorliegender Spezies hingegen nicht, sie läuft immer mindestens bis zur Stufe des Urethans (Carbamates) ab, wobei aber in der Regel erwünscht ist, den Umsatz des Alkohols bis zur Stufe des Allophanates zu führen, was die Gegenwart des aktiven Trimerisierungskatalysators, der im beanspruchten Fall auch für die Allophanatbildung geeignet und erforderlich ist, bedingt. Allophanatgruppen sind gegenüber den aus gleichen Bausteinen aufgebauten Urethanen besser im Polyisocyanat löslich als die entsprechenden Urethane und weisen - zumindest im Fall der Produkte auf Basis monofunktioneller Alkohole - eine gegenüber den Trimeren deutlich niedrigere Viskosität auf. Prinzipiell nachteilig ist hingegen, dass die aus monofunktionellen Alkoholen und Diisocyanaten aufgebauten Allophanatgruppen nur NCOdifunktionell sind und somit die (mittlere) NCO-Funktionalität der Polyisocyanate erniedrigen. Somit war es das Bestreben dieser Erfindung das Verhältnis zwischen Isocyanurat- und Allophanatgruppen auf ein Optimum in der erfindungsgemäßen Polyiscyanatzusammensetzung aus zu balancieren.

Unter einem Reaktionsgemisch wird im Folgenden eine Mischung von 1,5-Pentamethylendiisocyanat, des Katalysators, des Monoalkohols oder der Monoalkohole sowie gegebenenfalls weiterer Einsatzstoffe und der gebildeten Polyisocyanate verstanden.

In einer weiteren bevorzugten Ausführungsform wird der Verlauf der Umsetzung beim erfindungsgemäßen Verfahren über die Abnahme des NCO-Gehaltes in der Reaktionsmischung verfolgt. Der Gehalt an Isocyanatgruppen

in der Reaktionsmischung kann, ebenso wie der Gehalt an Isocyanatgruppen der nach dem erfindungsgemäßen Verfahren erhaltenen Polyisocyanatzusammensetzung, z. B. titrimetrisch gemäß DIN EN ISO 11 909 bestimmt werden.

Gemäß einer weiteren bevorzugten Ausführungsform wird die Umsetzung so weit geführt, dass das Reaktionsgemisch einen Oligomerisierungsgrad von 10 bis 40%, vorzugsweise von 15 bis 30% aufweist. Vorliegend ist unter "Oligomerisierungsgrad" der Prozentsatz, der in der Ausgangsmischung ursprünglich vorhandenen Isocyanatgruppen zu verstehen, der während der erfindungsgemäßen Umsetzung verbraucht wird. Der Oligomerisierungsgrad in Prozent kann nach folgender Formel berechnet werden:

$$\text{Oligomerisierungsgrad} = (\text{NCO Start} - \text{NCO Ende}) / \text{NCO Start} \times 100.$$

Die Umsetzung kann z. B. nach Erreichen des angestrebten Oligomerisierungsgrades abgebrochen werden. Dieser Oligomerisierungsgrad wird im allgemeinen nach einer Reaktionszeit von 30 Minuten bis 8 Stunden, vorzugsweise von 1 bis 6 Stunden erreicht.

Ein Abbruch der Umsetzung kann beispielsweise durch Abkühlen des Reaktionsgemisches auf Raumtemperatur erfolgen. Im Allgemeinen wird die Umsetzung aber durch Zugabe eines Katalysatorgiftes und gegebenenfalls nachfolgendes kurzzeitiges Erhitzen der Reaktionsmischung beispielsweise auf eine oberhalb 80 °C liegende Temperatur beendet.

Geeignete Katalysatorgifte sind beispielsweise anorganische Säuren wie Salzsäure, phosphorige Säure oder Phosphorsäure, Säurechloride wie Acetylchlorid, Benzoylchlorid oder Isophthaloyldichlorid, Sulfonsäuren und Sulfonsäureester, wie Methansulfonsäure, p-Toluol-sulfonsäure, Trifluormethansulfonsäure, Perfluorbutansulfonsäure, Dodecylbenzolsulfon-säure, p-Toluolsulfonsäuremethylester und -ethylester, Mono- und Dialkylphosphate wie Monotridecylphosphat, Dibutylphosphat und Dioctylphosphat aber auch silylierte Säuren, wie Methansulfonsäuretrimethylsilylester, Trifluormethansulfonsäuretrimethylsilylester, Phosphorsäure-tris-(trimethylsilylester) und Phosphorsäurediethylester-trimethylsilylester.

Die zur Beendigung der Umsetzung benötigte Menge des Katalysatorgiftes richtet sich dabei nach der Menge des verwendeten Katalysators; im allgemeinen wird eine äquivalente Menge des Katalysatorgiftes, bezogen auf den zu Beginn eingesetzten Katalysator, eingesetzt. Berücksichtigt man allerdings eventuell während der Umsetzung auftretende Verluste an Katalysator, so können zur Beendigung der Umsetzung auch schon 20 bis 80 Äquivalent-% des Katalysatorgiftes, bezogen auf die Menge des ursprünglich eingesetzten Katalysators, ausreichen.

Die genannten Katalysatorgifte können sowohl in Substanz als auch in einem geeigneten Lösungsmittel gelöst eingesetzt werden. Falls ein Lösungsmittel zur Lösung des Katalysatorgiftes zum Einsatz kommt, wird bevorzugt 1,5-Pentandiisocyanat eingesetzt. Der Verdünnungsgrad kann innerhalb eines sehr breiten Bereichs frei gewählt werden, geeignet sind beispielsweise Lösungen ab einer Konzentration von ≥ 25 Gew.-%, bevorzugt ≥ 10 Gew.-%.

Vorzugsweise wird das Reaktionsgemisch nach beendeter Umsetzung durch Dünnschichtdestillation im Vakuum, beispielsweise bei einem Druck von unter 1,0 mbar, vorzugsweise unter 0,75 mbar, besonders bevorzugt unter 0,25 mbar, unter möglichst schonenden Bedingungen, beispielsweise bei einer Temperatur von 100 bis 200 °C, vorzugsweise von 120 bis 180 °C, von flüchtigen Bestandteilen (überschüssigen monomeren Isocyanatkomponenten und gegebenenfalls mitverwendeten Lösungsmitteln) befreit.

In einer weiteren Ausführungsform des erfindungsgemäßen Verfahrens werden die genannten flüchtigen Bestandteile durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan von der erfindungsgemäßen Polyisocyanatzusammensetzung abgetrennt.

Die erfindungsgemäße Polyisocyanatzusammensetzung eignet sich in hervorragender Weise als Härter für Zwei-Komponenten-Systeme, in denen als gegenüber Isocyanatgruppen reaktive Bindemittel beispielsweise hydroxyfunktionelle Verbindungen wie z. B. Polyetherpolyole, Polyesterpolyole, Polycarbonatpolyole und/oder Polyacrylatpolyole als Reaktionspartner für die Polyisocyanatzusammensetzung zum Einsatz kommen.

Alternativ zu den oben genannten hydroxyfunktionellen Verbindungen kann die erfindungsgemäße Polyisocyanatzusammensetzung aber auch mit Polyaminen, wie z. B. den aus EP-B 0 403 921 bekannten Polyasparaginsäurederivaten, oder auch solchen Polyaminen, deren Aminogruppen in blockierter Form vorliegen, wie z. B. Polyketiminen, Polyaldiminen oder Oxazolanen, kombiniert werden. Aus diesen blockierten Aminogruppen entstehen unter Feuchtigkeitseinfluss freie Aminogruppen und im Falle der Oxazolane auch freie Hydroxylgruppen, die unter Vernetzung mit den Isocyanatgruppen der erfindungsgemäßen Polyisocyanatzusammensetzung abreagieren.

Daher ist ein Zwei-Komponenten-System enthaltend eine Komponente A), umfassend wenigstens eine erfindungsgemäße Polyisocyanatzusammensetzung und eine Komponente B), umfassend wenigstens ein gegenüber Isocyanatgruppen reaktives Bindemittel ein weiterer Gegenstand der Erfindung. Im Folgenden wird das Zwei-Komponenten-System auch als Beschichtungsmittel bezeichnet.

Gemäß einer weiteren bevorzugten Ausführungsform umfasst das gegenüber Isocyanatgruppen reaktive Bindemittel wenigstens eine hydroxyfunktionelle Verbindung mit einem Gehalt an Hydroxylgruppen von ≥ 5,0 Gew.-%, bevorzugt von ≥ 7,0 Gew.-% und besonders bevorzugt von ≥ 9,0 Gew.-%, bezogen auf den Feststoffgehalt des gegenüber Isocyanatgruppen reaktiven Bindemittels. Hiermit ist der vorteilhafte Effekt verbunden, dass ein solches Zwei-Komponenten-System eine ausgezeichnete Verträglichkeit aufweist und zu Beschichtungen mit weiter verbesserten physikalischen Eigenschaften führt.

Gegebenenfalls können dem formulierten Beschichtungsmittel weitere auf dem Lacksektor üblichen Hilfs- und Zusatzmittel zugesetzt werden. Als Hilfs- und Zusatzmittel eignen sich hierbei beispielsweise Verlaufshilfsmittel, Farbpigmente, Füllstoffe, Mattierungsmittel, anorganische oder organische Pigmente, Lichtschutzmittel, Lackadditive, wie Dispergiermittel, Verlaufsmittel, Verdicker, Entschäumer und andere Hilfsmittel, Haftmittel, Fungizide, Bakterizide, Stabilisatoren oder Inhibitoren und Katalysatoren oder Emulgatoren.

Bei der Herstellung der Beschichtungsmittel aus der erfindungsgemäßen Polyisocyanatzusammensetzung werden die genannten gegenüber Isocyanatgruppen reaktiven Bindemittel im allgemeinen in solchen Mengen eingesetzt, die einem Äquivalentverhältnis von Isocyanatgruppen gegenüber Isocyanatgruppen reaktiven Gruppen von 2:1 bis 0,5:1, bevorzugt von 1,5:1 bis 0,8:1, besonders bevorzugt von 1,1:1 bis 0,9:1 entsprechen.

Das Vermischen der erfindungsgemäßen Polyisocyanatzusammensetzung mit den gegenüber Isocyanatgruppen reaktiven Bindemitteln kann durch einfaches Verrühren vor der Verarbeitung der Beschichtungsmittel nach beliebigen Methoden, durch Verwendung von dem Fachmann bekannten mechanischen Hilfsmitteln oder auch unter Verwendung von Zwei-Komponenten-Spritzpistolen erfolgen.

In einer weiteren bevorzugten Ausführungsform können obige Zwei-Komponenten-Systeme bereits bei Raumtemperaturtrocknung hochglänzende, harte und elastische Beschichtungen ergeben, die sich durch hervorragende Lösungsmittelbeständigkeiten auszeichnen. Es ist jedoch ebenso möglich, dass diese 2-Komponenten-Systeme unter forcierten Bedingungen bei erhöhter Temperatur bzw. durch Einbrennen bei Temperaturen bis 260°C getrocknet werden.

Neben dem vorstehend beschriebenen bevorzugten Einsatz in unblockierter Form kann die erfindungsgemäße Polyisocyanatzusammensetzung aber auch mit den, aus der Polyurethanchemie bekannten Blockierungsmitteln blockiert, im Sinne von Ein-Komponenten-Systemen, eingesetzt werden. Als Blockierungsmittel können hierbei allgemein die in H.-U. Meier-Westhues, Polyurethane - Lacke, Kleb- und Dichtstoffe, Hannover Vincentz Network 2007 auf den Seiten 36-43 oder beispielsweise in der EP 713871 A1 beschriebenen Verbindungen eingesetzt werden.

Im Allgemeinen lassen sich die erfindungsgemäßen Zwei-Komponenten-Systeme hervorragend zur Herstellung einer Beschichtung auf einem Substrat verwenden. Daher ist eine Beschichtung, erhältlich durch Verwendung des erfindungsgemäßen Zwei-Komponenten-Systems ein weiterer Gegenstand der vorliegenden Erfindung.

Die Beschichtungsmittel basierend auf der erfindungsgemäßen Polyisocyanatzusammensetzung können nach bekannten Methoden wie beispielsweise durch Spritzen, Streichen, Fluten oder mit Hilfe von Walzen oder Rakeln auf beliebige Substrate aufgetragen werden. Als Substrate eignen sich beispielsweise Metall, Holz, Glas, Stein, keramische Materialien, Beton, harte und flexible Kunststoffe, Textilien, Leder oder Papier, die vor der Beschichtung gegebenenfalls auch mit üblichen Grundierungen versehen werden können.

Ein weiterer Gegenstand der Erfindung ist ein Verbund aus einer erfindungsgemäßen Beschichtung und einem Substrat mit einer Oberfläche aus Metall und/oder Kunststoff.

Neben den beschriebenen erfindungsgemäßen Beschichtungen kann die erfindungsgemäße Polyisocyanatzusammensetzung auch zur Herstellung von Formkörpern, Klebstoffen, Dichtstoffen, Gießelastomeren eingesetzt werden.

Im Nachfolgenden wird die Erfindung an Beispielen näher erläutert.

## Beispiele

Alle Mengenangaben beziehen sich, soweit nicht anders vermerkt, auf die Masse.

Die Ermittlung des NCO-Gehaltes der in den Beispielen und Vergleichsbeispielen hergestellten Polyisocyanatzusammensetzungen erfolgte durch Titration gemäß DIN EN ISO 11 909.

Die Bestimmung der Restmonomergehalte der Polyisocyanatzusammensetzungen erfolgte gaschromatographisch gemäß DIN EN ISO 10283.

Die dynamischen Viskositäten wurden bei 23 °C nach DIN EN ISO 3219 mit dem Viskosimeter VT 550 der Fa. Haake bestimmt. Durch Messungen bei unterschiedlichen Schergeschwindigkeiten wurde sichergestellt, dass das Fließverhalten der beschriebenen Polyisocyanate wie auch das der Vergleichsprodukte dem idealer Newtonscher Flüssigkeiten entspricht. Die Angabe der Schergeschwindigkeit kann deshalb entfallen.

Die Gehalte (mol-%) bzw. Verhältnisse der unter den erfindungsgemäßen Verfahrensbedingungen entstehenden Isocyanurat- und Allophanatgruppen wurden aus den Integralen protonenentkoppelter $^{13}C$-NMR-Spektren (aufgenommen an einem Gerät Bruker DPX-400) errechnet und beziehen sich jeweils auf die Summe an vorliegenden Isocyanurat- und Allophanatgruppen. Daten für die chemische Verschiebung der oben genannten Verbindungen wurden der Literatur entnommen (vgl. D. Wendisch, H. Reiff und D. Dieterich, Angew. Makromol. Chem. 1986, 141, 173-183

und darin zitierte Literatur.

Mittels Gelpermentations Chromatographie wurde der Gehalt an Isocyanurattrimer nach der DIN 55672-1 bestimmt. Der Bestimmungsbereich des verwendeten Säulensatzes lag im Bereich zwischen 100 und 20000 Dalton. Die Auswertung erfolgte mittels WIN GPC von Polymer Standard Services GmbH Mainz.

**Eingesetzte Chemikalien**

Dibutylphosphat (Sigma Aldrich)

2-Ethyl-hexan-1-ol (Sigma Aldrich)

Tetramethylammonium-2-ethylhexanoat (Eigensynthese aus Tetramethylammoniumchlorid und Natrium-2-ethylhexanoat; Sigma Aldrich)

N,N,N-Trimethyl-N-benzylammoniumhydroxid (40%ige Lösung in Methanol) (Sigma Aldrich) Monochlorbenzol (Sigma Aldrich)

Folgende kommerziell verfügbare Produkte wurden für die Prüfungen auf Verträglichkeit in den Anwendungsbeispielen eingesetzt:

Butylacetat, 1-Methoxy-2-propylacetat und Solventnaphtha leicht (Azelis Deutschland GmbH, Sankt Augustin)

Desmodur® N 3300, Desmodur® N 3790, Desmophen® 650 sowie Desmophen® 775 XP (Bayer MaterialScience AG Leverkusen, DE)

**Polyisocyanatzusammensetzung 1 (Beispiel 1, nicht erfindungsgemäß):**

In einen Vierhalskolben ausgestattet mit Rührer, Rückflusskühler, $N_2$-Durchleitungsrohr und Innenthermometer wurden 1000 g (6,49 mol) 1,5-Pentamethylendiisocyanat (PDI) vorgelegt und drei mal bei Raumtemperatur entgast und mit Stickstoff belüftet. Anschließend wurde der Ansatz auf 60 °C erwärmt und 2,7 ml der Katalysatorlösung (Tetramethylammonium-2-ethylhexanoat, 50%ig in Monochlorbenzol) so zudosiert, dass die exotherme Trimerisierung bei einer Temperatur von 60-80 °C gehalten wurde. Bei Erreichen eines NCO-Gehalts von 47,9 Gew.-% wurde die Reaktion mit Dibutylphosphat (äquimolare Menge bezogen auf eingesetztes Tetramethylammoniumoctoat) gestoppt und das überschüssige PDI bei 140 °C und 0,5-0,6 mbar Druck über eine Dünnschichtdestillation abgetrennt. Das erhaltene Harz wies einen NCO-Gehalt von 24,5% und einen Restmonomergehalt von 0,2% auf. Die Viskosität betrug 3.330 mPa*s bei 23 °C. Das Verhältnis der 13C-NMR integrale der Allophanatsignale zu Isocyanuratsignale (Summe Allophanat/2: Isocyanurat/3) betrug 0.

**Polyisocyanatzusammensetzung 2 (Beispiel 2, erfindungsgemäß):**

In einen Vierhalskolben ausgestattet mit Rührer, Rückflusskühler, $N_2$-Durchleitungsrohr und Innenthermometer wurden 1000 g (6,49 mol) 1,5-Pentamethylendiisocyanat (PDI) vorgelegt und drei mal bei Raumtemperatur entgast und mit Stickstoff belüftet. Anschließend wurde der Ansatz auf 60 °C erwärmt und 9,0 ml der Katalysatorlösung (1,5 %ige N,N,N-Trimethyl-N-benzyl-ammoniumhydroxid Lösung in Methanol und 2-Ethylhexanol) so zudosiert, dass die exotherme Trimerisierung bei einer Temperatur von 60-80 °C gehalten wurde. Bei Erreichen eines NCO-Gehalts von 36,7 Gew.-% wurde die Reaktion mit Dibutylphosphat (equimolare Menge bezogen auf eingesetztes Trimethylbenzylammoniumhydroxid) gestoppt und das überschüssige PDI bei 140 °C und 0,5-0,6 mbar Druck über eine Dünnschichtdestillation abgetrennt. Das erhaltene Harz wies einen NCO-Gehalt von 21,7%, einen Gehalt an Isocyanurattrimer von 41,2 Gew.-% und einen Restmonomergehalt von 0,3% auf. Die Viskosität betrug 10.000 mPa*s bei 23 °C. Das Verhältnis der 13C-NMR integrale der (Allophanatsignale / 2) zu Isocyanuratsignale ((Summe Allophanat / 2) : Isocyanurat / 3) betrug 0.12.

**Prüfung der Verträglichkeit**

Zur Prüfung auf die Verträglichkeit wurden die genannten Polyisocyanatzusammensetzungen im Anwendungsbeispiel 3 mit Desmophen® 650 (OH%-Gehalt 8,5 ± 0,4 bezogen auf den Feststoffgehalt des Polyols) und im Anwendungsbeispiel 4 mit Desmophen® 775 XP (OH%-Gehalt 12,5 ± 0,5 bezogen auf den Feststoffgehalt des Bindemittels)

umgesetzt. Die verwendeten Polyester zeichnen sich durch hervorragende Lichtechtheit, Glanzhaltung und Wetterbeständigkeit aus und besitzen eine sehr gute Chemikalienbeständigkeit sowie einen hohen Abriebwiderstand. Die im Produkt Datenblatt des Herstellers angegebene Verträglichkeit mit Polyisocyanaten des HDI beschränkt sich auf Biuretstrukturen enthaltende Polyisocyanate (Desmodur® N75, Desmodur® N100 sowie Desmodur® N3200).

Als erfindungsgemäße Vernetzer wurde die Polyisocyanatzusammensetzung, erhalten aus Beispiel 2 auf Basis PDI, eingesetzt und als Vergleichsbeispiele wurden das Polyisocyanurat, erhalten aus dem nichterfindungsgemäßen Beispiel 1 auf Basis PDI, sowie die Standard Polyisocyanurate auf Basis HDI der Bayer MaterialScience AG Desmodur® N 3300 und Desmodur® N 3790 verwendet.

Die Formulierungen wurde ohne Additive und Katalysatoren im NCO zu OH Verhältnis von 1,1 zu 1 in einer Verdünnung mit ca.: 30 sec. Auslaufzeit im DIN 4 Becher eingestellt. Für die Auslaufzeiteinstellung wurde ein Lösungsmittelgemisch Methoxypropylacetat, Butylacetat, Solvetnaphtha 100 (im Verhältnis 1:1:1) verwendet. Das vernetzte Lacksystem wurde per Spritzapplikation verarbeitet und zur Messung der Glanzwerte auf Erichsenprüfkarten Typ 24/5 appliziert. Die Trocknung erfolgte a) bei Raumtemperatur getrocknet (23 °C bei 50% rel. Luftfeuchtigkeit) bzw. b) 15 min. bei Raumtemperatur ab gelüftet und 30 min. bei 80 °C eingebrannt. Der Glanz wurde nach DIN EN ISO 2813 im 20° und 60° Winkel mittels eines Reflektometers (Byk Gardner micro haze plus) gemessen. Die Ergebnisse der anwendungstechnischen Untersuchungen sind in den Tabellen 1 und 2 zusammengefasst.

Die Verträglichkeit eines Lacksystems, sprich des Bindemittels mit dem Härter, kann als Funktion des Glanzes beschrieben werden. Kommt es während der Filmbildung zu einer Inhomogenität führen diese zu Störungen in der Oberfläche, welche wiederum zu Abweichungen im Verhältnis zwischen eingestrahltem und von der Oberfläche reflektiertem Licht führen. Genannte Abweichungen im Verhältnis des eingestrahlten und von der Oberfläche reflektierten Lichts können durch refraktometrische Glanzmessung bestimmt werden. Es gelten im 60° Winkel Glanzeinheiten (GU) von 70 bis 100 GU als hochglänzend, als seidenglänzend Glanzeinheiten zwischen 45 und 70 GU und zwischen 20 bis 45 GU als seidenmatt. Die 60° Geometrie ist für die Messung eines weiten Glanzbereichs gut geeignet. Visuell erkennbare Glanzgradunterschiede werden ausreichend bis gut differenziert. Im Hochglanzbereich von > 70 GU bei 60° ist die 20°-Geometrie besser geeignet, da Glanzgradunterschiede bei 60° nicht mehr deutlich unterschieden werden können.

**Tabelle 1: Anwendungsbeispiel 3**

| Polyester: Härter-Kombination | Desmophen® 650 MPA Desmodur®) N3300 | | Desmophen® 650 MPA Demodur® N 3790 BA | | Desmophen® 650 MPA erfindungsgemäßes Beispiel 2 | |
|---|---|---|---|---|---|---|
| Trocknungsbedingungen | RT | 30'/ 80°C | RT | 30'/ 80°C | RT | 30'/ 80°C |
| Glanz 20°/ 60°[GU] | 13 / 43 | 19 / 60 | 19 / 63 | 45 / 80 | 90 / 96 | 85 / 96 |

Wie in der Tabelle 1 ersichtlich, zeigt das erfindungsgemäße Beispiel 2 einen signifikant höheren Glanz im 60° als auch 20° Winkel. Somit kann von einer vollständigen Verträglichkeit zwischen dem hier verwendeten hoch OH-gruppenhaltigem Bindemittel (Desmophen® 650, 8,5 Gew.-% OH-Gehalt bezogen auf den Feststoffgehalt des Bindemittels) und der erfindungsgemäßen Polyisocyanatzusammensetzung auf Basis von 1,5-Pentandiisocyanat ausgegangen werden. Im Gegensatz dazu zeigen die beiden Lacksystem, bei welchen Polyisocyanurate des HDI mit dem Bindemittel Desmophen® 650 appliziert wurden, eindeutig geringere Glanzwerte in beiden Messwinkeln, womit sich eine mangelhafte Verträglichkeit dieser Systeme offenbart.

**Tabelle 2: Anwendungsbeispiel 4**

| Polyester: Härter-Kombination | Desmophen® 775 XP : nicht erfindungsgemäßes Beispiel 1 | | Desmophen® 775 XP : erfindunggemäßes Beispiel 2 | |
|---|---|---|---|---|
| Trocknungsbedingungen | RT | 30'/ 80°C | RT | 30'/ 80°C |
| Glanz 20°/ 60°[GU] | 15 / 46 | 16 / 49 | 46 / 85 | 74 / 92 |

Aus Tabelle 2 des Anwendungsbeispiels 4 wird ersichtlich, dass das erfindungsgemäße Beispiel 2 auch in Kombination mit dem sehr hoch OH-gruppenhaltigem Polyester Desmophen® 775 XP (12,5 Gew.-% OH-Gehalt bezogen auf den Feststoffgehalt des Bindemittels) in den Glanzmessungen einen deutlichen Vorteil gegenüber dem nicht erfindungsgemäßen Beispiel 1 aufweist. Das erfindungsgemäße Beispiel 2 erreicht in der Messung im 60° Winkel Glanzeinheiten die nach DIN EN ISO 2813 eine weitere Beurteilung im 20° Winkel erfordern. Im Gegensatz dazu zeigt beim nicht erfindungsgemäßen Beispiel 1 die Messung im 60° Winkel, auf Grund der niedrigen Glanzeinheiten bereits eine Unverträglichkeit, wodurch sich eine Messung im 20° Winkel erübrigt und lediglich informativen Charakter besitzt.

Zusammenfassend zeigen die anwendungstechnischen Ergebnisse, dass die erfindungsgemäße Polyisocyanatzusammensetzung eine verbesserte Verträglichkeit gegenüber hoch OH-gruppenhaltigen Bindemitteln aufweist.

## Patentansprüche

1. Polyisocyanatzusammensetzung, enthaltend Isocyanatgruppen aufweisende Verbindungen mit wenigstens einer 1,5- verbrückenden Pentamethyleneinheit und einer Isocyanuratgruppe, wobei ein Teil der Verbindungen zusätzlich noch wenigstens eine Allophanatgruppe aufweist, **dadurch gekennzeichnet, dass** die Polyisocyanatzusammensetzung einen Gehalt an Isocyanurattrimer von ≤ 59 Gew.-% bezogen auf das Gesamtgewicht der Polyisocyanatzusammensetzung aufweist, die Allophanatgruppen einen gegenüber Isocyanatgruppen inerten, organischen Rest tragen und die Allophanatgruppen zu den Isocyanurat-gruppen in einem Äquivalentverhältnis von > 0 und ≤ 0,19 vorliegen.

2. Polyisocyanatzusammensetzung nach Anspruch 1, **dadurch gekennzeichnet, dass** der Gehalt an Isocyanurattrimer ≤ 56 Gew.-%, bevorzugt ≤ 51 Gew.-% und besonders bevorzugt ≤ 47 Gew.-% bezogen auf das Gesamtgewicht der Polyisocyanatzusammensetzung ist.

3. Polyisocyanatzusammensetzung nach einem der Ansprüche 1 oder 2, **dadurch gekennzeichnet, dass** das Äquivalentverhältnis zwischen ≥ 0,02 und ≤ 0,18, bevorzugt zwischen ≥ 0,05 und ≤ 0,16 und besonders bevorzugt zwischen ≥ 0,10 und ≤ 0,15 liegt.

4. Polyisocyanatzusammensetzung nach einem der Ansprüche 1 bis 3, **dadurch gekennzeichnet, dass** der organische Rest ausgewählt wird aus der Gruppe linearer, verzweigter und gegebenenfalls substituierter Reste mit 1 bis 18 Kohlenstoffatomen, bevorzugt mit 1 bis 12 Kohlenstoffatomen und besonders bevorzugt mit 1 bis 8 Kohlenstoffatomen.

5. Polyisocyanatzusammensetzung nach einem der Ansprüche 1 bis 4, **dadurch gekennzeichnet, dass** der organische Rest über ein primäres oder sekundäres, bevorzugt über ein primäres Kohlenstoffatom mit der Allophanatgruppe verbunden ist.

6. Polyisocyanatzusammensetzung nach einem der Ansprüche 1 bis 5, **dadurch gekennzeichnet, dass** sie einen Gehalt an Isocyanatgruppen zwischen ≥ 15% und ≤ 25%, bevorzugt zwischen ≥ 17% und ≤ 24% und besonders bevorzugt zwischen ≥ 20% und ≤ 23% bezogen auf das Gesamtgewicht der erfindungsgemäßen Polyisocyanatzusammensetzung aufweist.

7. Polyisocyanatzusammensetzung nach einem der Ansprüche 1 bis 6, **dadurch gekennzeichnet, dass** sie nach DIN EN ISO 3219 bei 23 °C eine Viskosität von ≤ 36.000 mPa*s, bevorzugt von ≤ 24.000 mPa*s und besonders bevorzugt von ≤ 12.000 mPa*s aufweist.

8. Verfahren zur Herstellung einer Polyisocyanatzusammensetzung nach einem der Ansprüche 1 bis 7, **dadurch gekennzeichnet, dass** wenigstens 1,5-Diisocyanatopentan mit wenigstens einem linearen, verzweigten und gegebenenfalls substituierten, in der Seitenkette gegenüber Isocyanatgruppen inerten Monoalkohol vermischt wird und in Anwesenheit eines Katalysators zu der Polyisocyanatzusammensetzung umgesetzt wird.

9. Verfahren nach Anspruch 8, **dadurch gekennzeichnet, dass** die Umsetzung bei Temperaturen zwischen ≥ 0 und ≤ 180 °C, vorzugsweise ≥ 20 bis ≤ 140 °C, besonders bevorzugt ≥ 40 bis ≤ 100 °C durchgeführt wird.

10. Verfahren nach einem der Ansprüche 8 oder 9, **dadurch gekennzeichnet, dass** das 1,5-Diisocyanatopentan durch Phosgenierung von 1,5-Diaminopentan in der Gasphase erhalten wird.

11. Zwei-Komponenten-System enthaltend eine Komponente A), umfassend wenigstens eine Polyisocyanatzusammensetzung gemäß einem der Ansprüche 1 bis 7 und eine Komponente B), umfassend wenigstens ein gegenüber Isocyanatgruppen reaktives Bindemittel.

12. Zwei-Komponenten-System nach Anspruch 11, **dadurch gekennzeichnet, dass** das gegenüber Isocyanatgruppen reaktive Bindemittel wenigstens eine hydroxyfunktionelle Verbindung mit einem Gehalt an Hydroxylgruppen von ≥ 5,0 Gew.-%, bevorzugt von ≥ 7,0 Gew.-% und besonders bevorzugt von ≥ 9,0 Gew.-% bezogen auf den Feststoffgehalt des, gegenüber Isocyanatgruppen reaktiven, Bindemittels umfasst.

**13.** Verwendung des Zwei-Komponenten-Systems nach einem der Ansprüche 11 oder 12 zur Herstellung einer Beschichtung auf einem Substrat.

**14.** Beschichtung, erhältlich durch Verwendung des Zwei-Komponenten-Systems nach Anspruch 13.

**15.** Verbund aus einer Beschichtung nach Anspruch 14 und einem Substrat mit einer Oberfläche aus Metall und/oder Kunststoff.

**Claims**

**1.** Polyisocyanate composition comprising compounds containing isocyanate groups and having at least one 1,5-bridging pentamethylene unit and an isocyanurate group, with some of the compounds additionally having at least one allophanate group as well, **characterized in that** the polyisocyanate composition has an isocyanurate trimer content of ≤ 59 wt%, based on the total weight of the polyisocyanate composition, the allophanate groups carry an organic radical which is inert towards isocyanate groups, and the equivalent ratio of the allophanate groups to the isocyanurate groups is > 0 and ≤ 0.19.

**2.** Polyisocyanate composition according to Claim 1, **characterized in that** the isocyanurate trimer content is ≤ 56 wt%, preferably ≤ 51 wt%, and more preferably ≤ 47 wt%, based on the total weight of the polyisocyanate composition.

**3.** Polyisocyanate composition according to either of Claims 1 and 2, **characterized in that** the equivalent ratio is between ≥ 0.02 and ≤ 0.18, preferably between ≥ 0.05 and ≤ 0.16, and more preferably between ≥ 0.10 and ≤ 0.15.

**4.** Polyisocyanate composition according to any of Claims 1 to 3, **characterized in that** the organic radical is selected from the group of linear, branched, and optionally substituted radicals having 1 to 18 carbon atoms, preferably having 1 to 12 carbon atoms, and more preferably having 1 to 8 carbon atoms.

**5.** Polyisocyanate composition according to any of Claims 1 to 4, **characterized in that** the organic radical is connected via a primary or secondary, preferably via a primary, carbon atom to the allophanate group.

**6.** Polyisocyanate composition according to any of Claims 1 to 5, **characterized in that** it has an isocyanate group content of between ≥ 15% and ≤ 25%, preferably between ≥ 17% and ≤ 24%, and more preferably between ≥ 20% and ≤ 23%, based on the total weight of the polyisocyanate composition of the invention.

**7.** Polyisocyanate composition according to any of Claims 1 to 6, **characterized in that** according to DIN EN ISO 3219 at 23°C it has a viscosity of ≤ 36 000 mPa*s, preferably of ≤ 24 000 mPa*s, and more preferably of ≤ 12 000 mPa*s.

**8.** Process for producing a polyisocyanate composition according to any of Claims 1 to 7, **characterized in that** at least 1,5-diisocyanatopentane is mixed with at least linear, branched, and optionally substituted monoalcohol which is inert in the side chain toward isocyanate groups, and reaction is carried out in the presence of a catalyst to give the polyisocyanate composition.

**9.** Process according to Claim 8, **characterized in that** the reaction is carried out at temperatures between ≥ 0 and ≤ 180°C, preferably ≥ 20 to ≤ 140°C, more preferably ≥ 40 to ≤ 100°C.

**10.** Process according to either of Claims 8 and 9, **characterized in that** the 1,5-diisocyanatopentane is obtained by phosgenation of 1,5-diaminopentane in the gas phase.

**11.** Two-component system comprising a component A), comprising at least one polyisocyanate composition according to any of Claims 1 to 7, and a component B), comprising at least one binder that is reactive toward isocyanate groups.

**12.** Two-component system according to Claim 11, **characterized in that** the binder that is reactive toward isocyanate groups comprises at least one hydroxy-functional compound having a hydroxyl group content of ≥ 5.0 wt%, preferably of ≥ 7.0 wt%, and more preferably of ≥ 9.0 wt%, based on the solids content of the binder that is reactive toward isocyanate groups.

13. Use of the two-component system according to either of Claims 11 and 12 for producing a coating on a substrate.

14. Coating obtainable by use of the two-component system according to Claim 13.

15. Assembly composed of a coating according to Claim 14 and a substrate having a surface of metal and/or plastic.

**Revendications**

1. Composition de polyisocyanate, contenant des composés comprenant des groupes isocyanate contenant au moins une unité pentaméthylène pontante en position 1,5 et un groupe isocyanurate, une partie des composés comprenant en outre au moins un groupe allophanate, **caractérisée en ce que** la composition de polyisocyanate présente une teneur en trimère isocyanurate ≤ 59 % en poids, par rapport au poids total de la composition de polyisocyanate, les groupes allophanate portant un radical organique inerte vis-à-vis des groupes isocyanate, et les groupes allophanate étant présents par rapport aux groupes isocyanurate en un rapport équivalent > 0 et ≤ 0,19.

2. Composition de polyisocyanate selon la revendication 1, **caractérisée en ce que** la teneur en trimère isocyanurate est ≤ 56 % en poids, de préférence ≤ 51 % en poids et de manière particulièrement préférée ≤ 47 % en poids, par rapport au poids total de la composition de polyisocyanate.

3. Composition de polyisocyanate selon l'une quelconque des revendications 1 ou 2, **caractérisée en ce que** le rapport équivalent est compris entre ≥ 0,02 et ≤ 0,18, de préférence entre ≥ 0,05 et ≤ 0,16, et de manière particulièrement préférée entre ≥ 0,10 et ≤ 0,15.

4. Composition de polyisocyanate selon l'une quelconque des revendications 1 à 3, **caractérisée en ce que** le radical organique est choisi dans le groupe des radicaux linéaires, ramifiés et éventuellement substitués, de 1 à 18 atomes de carbone, de préférence de 1 à 12 atomes de carbone, et de manière particulièrement préférée de 1 à 8 atomes de carbone.

5. Composition de polyisocyanate selon l'une quelconque des revendications 1 à 4, **caractérisée en ce que** le radical organique est relié par un atome de carbone primaire ou secondaire, de préférence par un atome de carbone primaire, avec le groupe allophanate.

6. Composition de polyisocyanate selon l'une quelconque des revendications 1 à 5, **caractérisée en ce qu'**elle présente une teneur en groupes isocyanate comprise entre ≥ 15 % et ≤ 25 %, de préférence entre ≥ 17 % et ≤ 24 %, et de manière particulièrement préférée entre ≥ 20 % et ≤ 23 %, par rapport au poids total de la composition de polyisocyanate selon l'invention.

7. Composition de polyisocyanate selon l'une quelconque des revendications 1 à 6, **caractérisée en ce qu'**elle présente selon DIN EN ISO 3219 à 23 °C une viscosité ≤ 36 000 mPa*s, de préférence ≤ 24 000 mPa*s, et de manière particulièrement préférée ≤ 12 000 mPa*s.

8. Procédé de fabrication d'une composition de polyisocyanate selon l'une quelconque des revendications 1 à 7, **caractérisé en ce qu'**au moins du 1,5-diisocyanatopentane est mélangé avec au moins un monoalcool linéaire, ramifié et éventuellement substitué, inerte vis-à-vis des groupes isocyanate dans la chaîne latérale, et mis en réaction en présence d'un catalyseur pour former la composition de polyisocyanate.

9. Procédé selon la revendication 8, **caractérisé en ce que** la réaction est réalisée à des températures comprises entre ≥ 0 et ≤ 180 °C, de préférence de ≥ 20 à ≤ 140 °C, de manière particulièrement préférée de ≥ 40 à ≤ 100 °C.

10. Procédé selon l'une quelconque des revendications 8 ou 9, **caractérisé en ce que** le 1,5-diisocyanatopentane est obtenu par phosgénation de 1,5-diaminopentane dans la phase gazeuse.

11. Système bicomposant contenant un composant A), comprenant au moins une composition de polyisocyanate selon l'une quelconque des revendications 1 à 7, et un composant B), comprenant au moins un liant réactif avec les groupes isocyanate.

12. Système bicomposant selon la revendication 11, **caractérisé en ce que** le liant réactif avec les groupes isocyanate

comprend au moins un composé à fonction hydroxy ayant une teneur en groupes hydroxyle ≥ 5,0 % en poids, de préférence ≥ 7,0 % en poids, et de manière particulièrement préférée ≥ 9,0 % en poids, par rapport à la teneur en solides du liant réactif avec les groupes isocyanate.

**13.** Utilisation du système bicomposant selon l'une quelconque des revendications 11 ou 12 pour la fabrication d'un revêtement sur un substrat.

**14.** Revêtement, pouvant être obtenu par l'utilisation du système bicomposant selon la revendication 13.

**15.** Composite constitué par un revêtement selon la revendication 14 et un substrat ayant une surface en métal et/ou en matière plastique.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0330966 B1
- EP 0798299 B1
- DE 1493360 B1
- DE 1900514 A1
- EP 2543736 A1
- EP 1091991 B1
- EP 0524500 A1
- EP 0524501 A1
- JP 2007112936 A
- EP 0289840 B1
- EP 1319655 A2
- EP 1555258 A1
- EP 1275639 A1
- EP 1275640 A1
- EP 1449826 A1
- EP 1754698 B1
- DE 10359627 A1
- DE 102005042392 A1
- EP 0649866 A1
- EP 0896009 A1
- EP 0403921 B
- EP 713871 A1


### In der Beschreibung aufgeführte Nicht-Patentliteratur


- **H. J. LAAS ; R. HALPAAP ; J. PEDAIN.** *J. prakt. Chem.,* 1994, vol. 336, 185-200
- **H.-U. MEIER-WESTHUES.** Polyurethane - Lacke, Kleb- und Dichtstoffe. Hannover Vincentz Network, 2007, 72 ff
- **W. SIEFKEN.** *Liebigs Ann. Chem.,* 1949, vol. 562, 122
- **P.B. JACOBS ; H. MERTES ; R.S. DEARTH.** *Ihrem Artikel im European coatings journal,* 1996, 594-600
- **D. WENDISCH ; H. REIFF ; D. DIETERICH.** *Angew. Makromol. Chem.,* 1986, vol. 141, 173-183
- **H. J. LAAS et al.** *J. Prakt. Chem.,* 1994, vol. 336, 185 ff
- **D. DIETERICH.** *Methoden der organischen Chemie (Houben-Weyl),* 1987, vol. E 20, 1741 ff
- **H.-U. MEIER-WESTHUES.** Polyurethane - Lacke, Kleb- und Dichtstoffe. Hannover Vincentz Network, 2007